# DEMANDE DE BREVET EUROPEEN

(11) **EP 4 657 682 A2**
(43) Date de publication de la demande: **03.12.2025**
(21) Numéro de dépôt: 25169307.3
(22) Date de dépôt: 08.04.2025
(51) Int. Cl.: H02G 3/02, H01R 43/01, H01R 11/03, H01R 4/64, H01R 4/26, H01R 4/2495, H01R 4/2407, H02G 3/32

(54) **DISPOSITIF DE CONNEXION ELECTRIQUE**

(30) Priorité: 30.05.2024 FR 2405611
(71) Demandeur: Mobasolar, 68600 Wolfgantzen (FR)
(72) Inventeur: KELLER, Marc, 68127 Oberhergheim (FR)
(74) Mandataire: Ipsilon

(57) **Abrégé**

L'invention concerne un dispositif de connexion électrique (1) entre une pièce (2) et un tronçon de câble (3).

Le dispositif de connexion électrique (1) est particulier en ce qu'il comporte :
- une section (4), configurée pour recevoir ladite pièce (2), et assurer une fixation entre ledit dispositif (1) et ladite pièce (2), ladite section (4) comportant deux moyens de connexion électrique (5) entre ladite pièce (2) et ledit dispositif (1),
- un moyen de maintien (6) dudit tronçon de câble (3), et
- un moyen de poinçonnage (7) configuré pour pouvoir être mis dans une position de connexion, dans lequel il pénètre le cœur du tronçon de câble (3).

L'invention concerne également un ensemble comportant un dispositif (1), une pièce (2) et un tronçon de câble (3), et un procédé de connexion entre une pièce (2) et un tronçon de câble (3) au moyen d'un dispositif (1).

## Description

### Domaine technique

La présente invention concerne un dispositif de connexion électrique pour relier électriquement et fixer mécaniquement une pièce réalisée au moins partiellement dans un matériau électriquement conducteur, et un tronçon de câble, dont le cœur est conducteur, entre eux. L'invention permet, par exemple, de mettre à la terre la pièce par l'intermédiaire d'un câble de terre.

L'invention trouve une application particulièrement avantageuse pour la mise à la terre des cadres de panneaux photovoltaïques ou tout autre système nécessitant une connexion électrique.

### Technique antérieure

Le Demandeur développe des solutions particulièrement pertinentes pour mettre à la terre des équipements électriques.

Il est notamment titulaire du brevet EP3997759, qui propose un dispositif de connexion de mise à la terre d'une installation électrique. Ce dispositif comporte des moyens d'auto-connexion permettant de créer une liaison électrique automatiquement lors du montage d'équipements électriques, tels que des cadres de panneaux photovoltaïques, sur leurs supports.

Toutefois ce dispositif n'est pas adapté pour tous les cas de figure. En particulier, ce dispositif n'est pas adapté lorsque seul des cadres de panneaux photovoltaïques doivent être mis à la terre.

### Exposé de l'invention

La présente invention vise à pallier ces inconvénients en proposant un dispositif de connexion électrique entre au moins une pièce réalisée au moins partiellement dans un matériau électriquement conducteur et un tronçon de câble comportant au moins un cœur électriquement conducteur.

Ce dispositif de connexion électrique est particulier en ce qu'il comporte :
- une section en forme de U, comportant deux jambes reliée à un fond, configurée pour recevoir partiellement ladite au moins une pièce entre les deux jambes du U, ladite section présentant une certaine flexibilité et étant dimensionnée afin de pouvoir exercer une pression sur ladite au moins une pièce afin de former une pince et d'assurer une fixation mécanique entre ledit dispositif de connexion électrique et ladite au moins une pièce, ladite section comportant deux moyens de connexion électrique, disposés chacun sur une des jambes du U, permettant de générer une connexion électrique entre ladite au moins une pièce et ledit dispositif de connexion électrique lorsque ladite au moins une pièce est partiellement disposée entre les jambes du U,
- un moyen de maintien, apte à maintenir le tronçon dudit tronçon de câble en position par rapport au dispositif de connexion électrique, le moyen de maintien comportant au moins un mode actif, dans lequel il est apte à maintenir le tronçon de câble, et un mode inactif, dans lequel le tronçon de câble peut être passé d'une position dans laquelle il n'est pas maintenu par le moyen de maintien, vers une position dans laquelle il est maintenu par le moyen de maintien, et inversement, et
- un moyen de poinçonnage configuré pour pouvoir être mis en position d'attente, dans lequel il n'est pas en contact électrique avec le cœur du tronçon de câble lorsqu'un tronçon dudit tronçon de câble est maintenu en position par ledit moyen de maintien, ou dans une position de connexion, dans lequel il pénètre au moins partiellement le cœur du tronçon de câble, afin de générer une connexion électrique entre le cœur du tronçon de câble et ladite au moins une pièce partiellement insérée entre les jambes du U, et une fixation mécanique entre le tronçon de câble et le dispositif de connexion électrique.

Grâce à ces dispositions, une connexion électrique fiable, ainsi qu'un assemblage mécanique, peuvent être établis entre le tronçon de câble et ladite au moins une pièce de façon simple et rapide.

Ledit dispositif de connexion électrique peut comporter une lame électriquement conductrice, ledit dispositif de connexion électrique pouvant consister en ladite lame découpée et/ou pliée, ce qui est un mode de réalisation particulièrement efficace, et facile à fabriquer. La quantité de matière nécessaire pour fabriquer un dispositif de connexion électrique selon l'invention est également réduite.

Ledit dispositif de connexion électrique peut être configuré pour que lorsque ledit tronçon de câble est maintenu en position par rapport au dispositif de connexion électrique par le moyen de maintien, ledit tronçon de câble appartient à un câble pouvant s'étendre de part et d'autre dudit tronçon de câble, ce qui permet de connecter un câble unique à plusieurs dispositifs selon l'invention, le long d'un ou plusieurs pièces telles que des modules photovoltaïques.

Ledit dispositif de connexion électrique peut être configuré pour que lorsque ledit tronçon de câble est maintenu en position par rapport au dispositif de connexion électrique par le moyen de maintien, ledit tronçon de câble est disposé parallèlement aux jambes du U, ce qui rend plus aisé la connexion d'un câble unique à plusieurs dispositifs selon l'invention, parallèlement le long d'un ou plusieurs pièces telles que des modules photovoltaïques.

Au moins un desdits deux moyens de connexion électrique peut comprendre au moins une dent pointue, la pointe de ladite au moins une dent pointue pouvant être configurée pour entrer dans la matière de ladite au moins une pièce, lorsque ladite au moins une pièce est partiellement insérée entre les jambes du U, ce qui est un mode de réalisation simple et robuste de l'invention, particulièrement adapté pour une fabrication par découpage et/ou pliage d'une lame électriquement conductrice.

La pointe de ladite au moins une dent pointue peut être orientée de façon à s'opposer à un retrait de ladite au moins une pièce d'entre les jambes du U, ce qui renforce la fiabilité de la fixation mécanique du dispositif de connexion à ladite au moins une pièce.

Le moyen de poinçonnage peut comporter au moins une dent pointue, la dent pointue pouvant être configurée pour que lorsque le moyen de poinçonnage est en position d'attente, la pointe présente avec le plan tangent à la surface du tronçon de câble un angle compris entre 70 et 90°, ce qui permet une connexion électrique fiable et facile à obtenir entre le moyen de poinçonnage et le cœur du tronçon de câble.

Le moyen de poinçonnage peut comporter au moins deux dents pointue, lesdites dents pointues pouvant être configurées pour pénétrer le tronçon de câble en deux emplacements distincts de sa circonférence, ces deux emplacements étant séparés d'une distance au moins égale au quart de la circonférence de la section dudit tronçon de câble, ce qui renforce la fiabilité de la connexion électrique entre le moyen de poinçonnage et le cœur du tronçon de câble, et facilite la mise en position de connexion du moyen de poinçonnage, qui peut être obtenue en rapprochant entre eux lesdites dents pointues.

Le moyen de maintien peut être configuré pour maintenir le tronçon de câble en dehors de l'espace situé entre les jambes du U, ce qui est un mode de réalisation conférant une plus grande souplesse à l'invention, et lui permet donc une adaptation à de nombreuses applications variées.

Le moyen de maintien peut comporter deux éléments de maintien, et dans le mode actif du moyen de maintien, la distance entre les deux éléments de maintien est inférieure à la section du tronçon de câble, et dans le mode inactif du moyen de maintien, la distance entre les deux éléments de maintien est supérieure ou égale à la section du tronçon de câble, afin de pouvoir insérer le tronçon de câble entre lesdits éléments de maintien, ce qui est un mode de réalisation de l'invention simple et efficace.

Le moyen de maintien peut être configuré pour subir une déformation élastique pour passer de son mode actif à son mode inactif, et inversement, ce qui permet d'effectuer ces opérations manuellement, sans l'usage d'outils particulier.

Le moyen de maintien peut être configuré pour subir une déformation plastique pour passer de son mode actif à son mode inactif, et inversement, ce qui permet de rendre plus fiable le maintien du tronçon de câble par le moyen de maintien.

Le moyen de poinçonnage peut être configuré pour subir une déformation plastique pour passer de la position d'attente à la position de connexion, ce qui permet de rendre plus fiable le maintien de la connexion électrique entre le moyen de poinçonnage et le cœur du tronçon de câble.

Les deux jambes du U peuvent présenter deux longueurs différentes, ce qui facilite l'insertion partielle de ladite au moins une pièce dans la section en forme de U, la section en U pouvant notamment se présenter avec un certain angle des jambes par rapport à ladite au moins une pièce, et présenter pour l'insertion de ladite au moins une pièce une ouverture plus importante que l'écartement entre les jambes du U.

La présente invention concerne également un ensemble comportant un dispositif de connexion électrique selon l'invention, un tronçon de câble comportant un cœur électriquement conducteur, et au moins une pièce réalisée au moins partiellement dans un matériau électriquement conducteur, ledit tronçon de câble étant maintenu en position par le moyen de maintien dudit dispositif de connexion électrique, le moyen de poinçonnage dudit dispositif de connexion électrique étant en position de connexion, et ladite au moins une pièce étant partiellement insérée dans la section en U, ladite au moins une pièce et le tronçon de câble étant reliés mécaniquement et électriquement entre eux par l'intermédiaire du dispositif de connexion électrique.

Grâce à ces dispositions, une connexion électrique fiable, ainsi qu'un assemblage mécanique, peuvent être établis entre le tronçon de câble et ladite au moins une pièce de façon simple et rapide.

La présente invention concerne encore un ensemble comportant un dispositif de connexion électrique selon l'invention et une pince, ladite pince comportant deux mors mobiles l'un par rapport à l'autre selon un axe de rotation, afin de passer d'une position ouverte vers une position fermée, et inversement, la forme des mors étant configurée pour que :
- dans une position intermédiaire de la pince, entre la position ouverte et la position fermée, les mors épousent la forme du moyen de maintien en mode inactif et du moyen de poinçonnage en position d'attente, et
- en position fermée de la pince, les mors épousent la forme du moyen de maintien en mode actif et du moyen de poinçonnage en position de connexion.

Grâce à ces dispositions, un opérateur seul peut mettre en place le dispositif selon l'invention de façon simple.

La présente invention concerne encore un procédé de connexion électrique entre au moins une pièce réalisée au moins partiellement dans un matériau électriquement conducteur et un tronçon de câble comportant un cœur électriquement conducteur, comportant les étapes suivantes :
- assemblage du tronçon de câble et d'un dispositif de connexion électrique selon l'invention, par l'intermédiaire du moyen de maintien du dispositif de connexion électrique, le moyen de poinçonnage dudit dispositif de connexion électrique étant en position d'attente,
- insertion partielle de ladite au moins une pièce dans la section en U du dispositif de connexion électrique, générant la fixation mécanique et la liaison électrique entre ladite au moins une pièce et le dispositif de connexion électrique,
- mise en position de connexion du moyen de poinçonnage, générant la fixation mécanique et la liaison électrique entre le tronçon de câble et ladite au moins une pièce, par l'intermédiaire de la fixation mécanique et de la liaison électrique entre le tronçon de câble et le dispositif de connexion électrique.

Grâce à ces dispositions, une connexion électrique fiable, ainsi qu'un assemblage mécanique, peuvent être établis entre le tronçon de câble et ladite au moins une pièce de façon simple et rapide.

La présente invention concerne encore un procédé d'utilisation d'un comportant un dispositif et une pince, comportant les étapes suivantes :
- mise en position ouverte de la pince,
- placement d'un dispositif entre les mors,
- mise en position intermédiaire de la pince, de sorte que le dispositif soit situé entre les mors, la pression exercée par la pince sur le dispositif étant suffisante pour que le dispositif soit solidaire de la pince, le moyen de maintien du dispositif 1 étant en mode inactif, et le moyen de poinçonnage du dispositif étant en position d'attente,
- placement d'un tronçon de câble au niveau du moyen de maintien et du moyen de poinçonnage,
- mise en position fermée de la pince, de sorte à mettre le moyen de maintien en mode actif, et le moyen de poinçonnage en position de connexion, afin d'assurer le maintien du tronçon de câble par le moyen de maintien et la connexion électrique du tronçon de câble au dispositif.

Grâce à ces dispositions, un opérateur seul peut mettre en place le dispositif selon l'invention de façon simple.

### Brève description des dessins

La présente invention et ses avantages apparaîtront mieux dans la description suivante de plusieurs modes de réalisation donnés à titre d'exemples non limitatifs, en référence aux dessins annexés, dans lesquels:
[Fig 1] la fig. 1 est une vue en perspective d'un dispositif de connexion selon un premier mode de réalisation de l'invention,
[Fig 2] la fig. 2 est une vue de côté du dispositif de connexion de la figure 1,
[Fig 3] la fig. 3 est une vue en perspective du dispositif de connexion de la figure 1, un tronçon de câble étant maintenu par le dispositif de maintien,
[Fig 4] la fig. 4 est une vue de côté du dispositif de connexion et du tronçon de câble de la figure 3,
[Fig 5] la fig. 5 est une vue en coupe du dispositif de connexion et du tronçon de câble de la figure 3, fixés à une pièce,
[Fig 6] la fig. 6 est une vue en perspective d'un dispositif de connexion selon un deuxième mode de réalisation de l'invention,
[Fig 7] la fig. 7 est une vue de côté du dispositif de connexion de la figure 6,
[Fig 8] la fig. 8 est une vue en perspective d'un dispositif de connexion selon un troisième mode de réalisation de l'invention,
[Fig 9] la fig. 9 est une vue de côté du dispositif de connexion de la figure 8,
[Fig. 10] la fig. 10 est une vue en perspective d'un dispositif de connexion selon un quatrième mode de réalisation de l'invention,
[Fig. 11] la fig. 11 est une vue de côté du dispositif de connexion de la figure 10, un tronçon de câble étant maintenu par le dispositif de maintien,
[Fig. 12] la fig. 12 est une vue en perspective d'un dispositif de connexion selon un cinquième mode de réalisation de l'invention,
[Fig. 13] la fig. 13 est une vue de côté du dispositif de connexion de la figure 12,
[Fig 14] la fig. 14 est une vue en perspective du dispositif de connexion de la figure 12, avec un tronçon de câble,
[Fig 15] la fig. 15 est une vue de côté du dispositif de connexion et du tronçon de câble de la figure 14,
[Fig. 16] la fig. 16 est une vue de côté du dispositif de connexion et du tronçon de câble de la figure 14, le tronçon de câble étant maintenu par le dispositif de maintien,
[Fig. 17] la fig. 17 est une vue en perspective d'un mode de réalisation d'une pince adaptée au dispositif selon l'invention,
[Fig. 18] la fig. 18 est une vue de face de la pince de la figure 17 avec un dispositif selon l'invention et un tronçon de câble, dans une position intermédiaire,
[Fig. 19] la fig. 19 est une vue de face de la pince de la figure 17 avec un dispositif selon l'invention et un tronçon de câble, dans une position fermée,
[Fig. 20] la fig. 20 est une vue de côté de l'assemblage d'un dispositif selon la figure 10 maintenant un câble, en attente d'assemblage avec une pièce par le moyen d'une pince selon la figure 17,
[Fig. 21] la fig. 21 est une vue de côté de l'assemblage d'un dispositif selon la figure 10 maintenant un câble, assemblée avec une pièce par le moyen d'une pince selon la figure 17.

### Description des modes de réalisation

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu.

Cette tolérance est notamment introduite par l'adverbe « sensiblement », sans que ce terme soit nécessairement répété devant chaque adjectif.

En référence aux figures, le dispositif 1 de connexion électrique selon l'invention permet d'effectuer la connexion électrique entre au moins une pièce 2 et un tronçon de câble 3. La pièce 2 est réalisée au moins partiellement dans un matériau électriquement conducteur. Le câble 3 comprend un cœur électriquement conducteur.

Dans la suite de la description, quand il est fait référence à une pièce 2 unique, et sauf mention contraire, les dispositions s'appliquant à la pièce 2 peuvent s'appliquer également dans le cas de plusieurs pièces 2.

La pièce 2 est généralement réalisée dans un matériau métallique, par exemple de l'aluminium. La pièce 2 est parfois anodisée, c'est-à-dire recouverte en surface d'une couche d'isolation.

Le câble 3 est par exemple un câble de mise à la terre, comprenant classiquement une gaine jaune et verte. Il peut toutefois s'agir d'un autre type de câble, utilisé pour une mise à la terre, ou une mise en équipotentialité de la pièce 2 avec d'autres éléments d'une installation. Le câble 3 peut comporter une gaine isolante, à l'intérieur de laquelle se trouve un ou plusieurs cœurs électriquement conducteurs. Dans certains modes de réalisation, le câble 3 ne comporte pas de gaine isolante, le ou les cœurs électriquement conducteurs étant à nu.

Dans la présente description, l'expression « relier » ou « connecter électriquement » des pièces entre elles, désigne le fait d'établir une connexion électrique entre les parties conductrices des pièces.

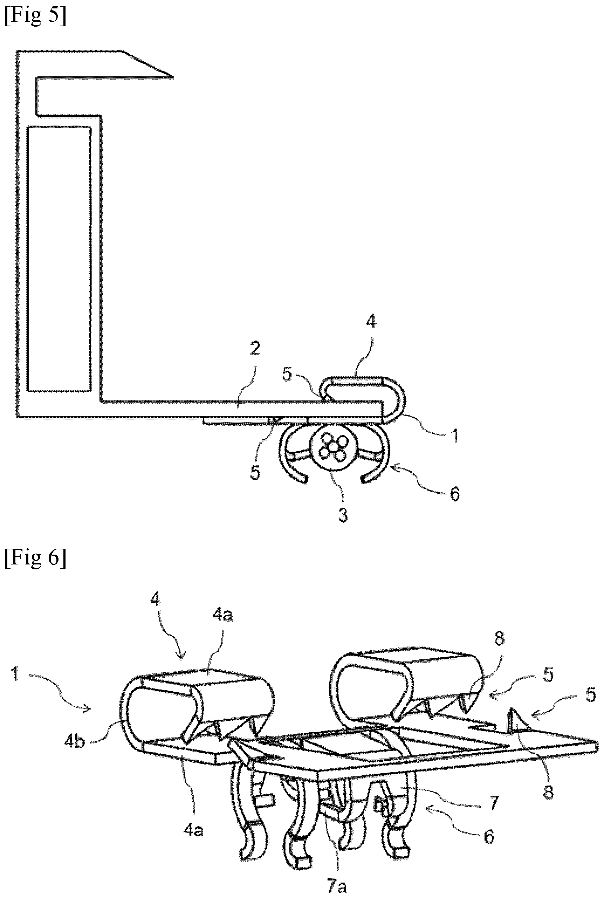

La figure 5 illustrent des exemples d'application de l'invention dans le cadre d'une installation de panneaux photovoltaïques, la pièce 2 étant un cadre de panneau photovoltaïque. L'invention n'est toutefois pas limitée aux installations de panneaux photovoltaïques mais s'étend à toute application mettant en œuvre des pièces au moins partiellement conductrices nécessitant une mise à la terre ou une mise en équipotentialité entre elles, tel que des panneaux thermiques, des panneaux hybrides thermiques/photovoltaïques ou similaires, des onduleurs ou micro-onduleurs, des structures métalliques de toutes sortes, des chemins de câbles, des cages de Faraday, des bâtis de machine, des cabines techniques de travail (ex. cabines de peinture), des éléments de faux-plafonds, etc. ces exemples n'étant pas limitatifs.

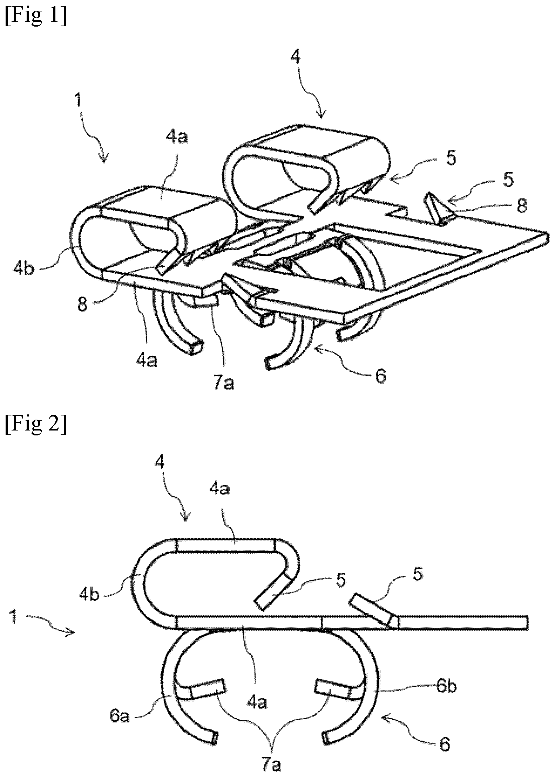

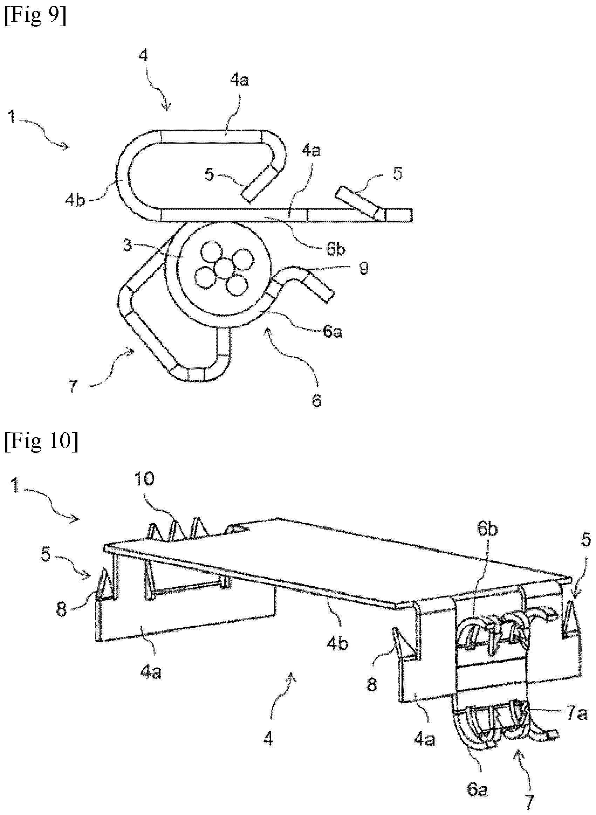

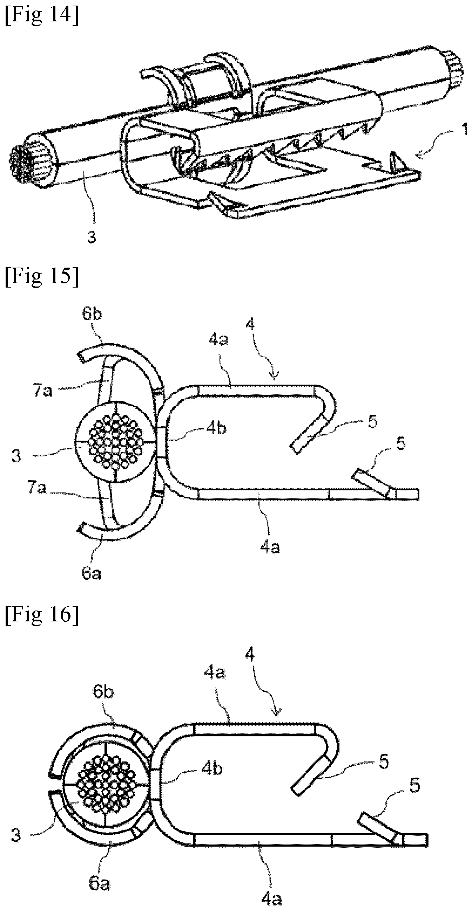

Le dispositif 1 comporte une section 4 en forme de U. Par « forme de U », on entend dans le cadre de la présente invention une forme comportant deux jambes 4a, reliée entre elles par l'intermédiaire d'un fond 4b. Le fond 4b peut être plat, comme illustré sur les figures 10 à 11, ou arrondi, comme illustré sur les figures 1 à 9 et 12 à 16. L'angle formé par les jambes 4a avec le fond 4b peut être identique pour les deux jambes 4a, par exemple un angle droit, ou différent pour chaque jambe 4a. Les jambes 4a peuvent être parallèles entre elles, ou former un angle, par exemple un angle inférieur à 20°, de préférence inférieur à 10°. Cet angle peut être disposé de façon à rapprocher les extrémités libres des jambes 4a entre elles, ou à les éloigner l'une de l'autre, par rapport à leurs extrémités situées du côté du fond du U.

La section 4 en U peut s'étendre sur toute la longueur du dispositif de connexion 1, ou seulement sur une partie de cette longueur, par exemple sur un ou plusieurs intervalles de sa longueur, comme illustré aux figures 1, 3, 6 et 8.

Les jambes 4a peuvent avoir la même longueur entre le fond 4b et leur extrémité libre. Les jambes 4a peuvent également avoir différentes longueurs, comme illustré à titre d'exemple sur les figures. Une différente longueur de jambes 4a permet d'obtenir une ouverture plus grande du U dans laquelle insérer la pièce 2, ce qui facilite l'étape d'insertion partielle de la pièce 2 dans la section en U 4.

La pièce 2 peut être partiellement insérée dans le logement formé entre les deux jambes 4a du U. Dans la suite de la description, l'expression « insertion dans la section en U 4 » désigne une insertion entre les jambes 4a du U. Cette insertion se fait de préférence par le côté opposé au fond 4b du U, c'est-à-dire du côté des extrémités libres des jambes 4a du U. La section en U 4 est dimensionnée et réalisée dans un matériau lui conférant une certaine flexibilité, afin qu'elle puisse exercer une pression sur la pièce 2, et former une pince. Ce pincement de la pièce 2 par la section en U 4 génère une fixation mécanique du dispositif 1 à la pièce 2.

La section en U 4 comporte deux moyens de connexion électrique 5, disposés chacun sur une des jambes 4a du U. Les moyens de connexion électrique 5 permettent de générer une connexion électrique entre la pièce 2 et le dispositif 1 lorsque la pièce 2 est partiellement disposée entre les jambes du U. Cette connexion électrique est générée de préférence automatiquement, lors de l'insertion de la pièce 2 entre les jambes 4a de la section en U 4.

Ce qui est décrit ci-dessus peut être appliqué avec une pièce 2 unique, connectée donc aux deux moyens de connexion électrique 5, ou à deux pièces 2, insérées ensemble dans la section en U 4, de façon à ce que chacune d'entre elles soit en contact avec un des moyens de connexion électrique 5, et donc qu'une liaison équipotentielle soit produite entre le dispositif 1 et chacune des deux pièces 2.

Le dispositif 1 comporte également un moyen de maintien 6. Le moyen de maintien 6 est configuré pour pouvoir assurer le maintien du tronçon du câble 3 dans une certaine position par rapport au dispositif 1. Ce maintien s'entend dans les directions transversales à la direction longitudinale du tronçon de câble 3, c'est-à-dire que dans certains modes de réalisation le câble 3 maintenu en position par le moyen de maintien 6 peut toujours coulisser selon une direction parallèle à sa direction longitudinale.

Le tronçon de câble 3 est de préférence un tronçon milieu, c'est-à-dire qu'il ne se situe pas à l'extrémité d'un câble. Le câble s'étend alors de chaque côté du tronçon de câble, et il n'est pas maintenu par le moyen de maintien 6 par son extrémité.

Le dispositif 1 comporte encore un moyen de poinçonnage 7. Le moyen de poinçonnage 7 est disposé par rapport au moyen de maintien 6, et donc par rapport à un éventuel tronçon de câble 3 maintenu en position par le moyen de maintien 6, afin de pouvoir être mis dans deux positions distinctes. Dans une première position du moyen de poinçonnage 7, dite d'attente, si un tronçon de câble 3 est maintenu par le moyen de maintien 6, le moyen de poinçonnage 7 n'est pas en contact électrique avec le cœur du câble 3. Dans une deuxième position du moyen de poinçonnage 7, dite de connexion, si un tronçon de câble 3 est maintenu par le moyen de maintien 6, le moyen de poinçonnage 7 est en contact électrique avec le cœur du câble 3. Une connexion électrique est ainsi établie entre le cœur du tronçon de câble 3 et le dispositif de connexion 1, et donc éventuellement avec une pièce 2 insérée dans la section en U 4, les moyens de connexion électrique 5 étant reliés électriquement au moyen de poinçonnage 7 au sein du dispositif de connexion 1, par exemple par le fait que le dispositif de connexion 1 est entièrement réalisé dans un matériau conducteur.

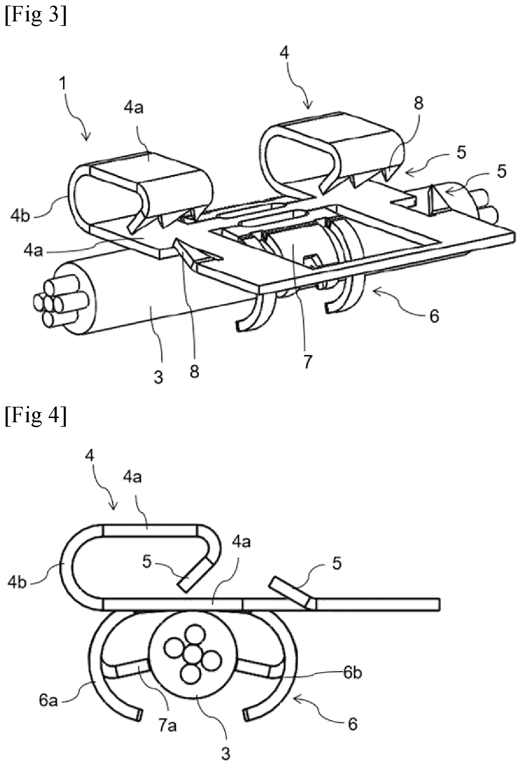

Sur les figures 4, 7, 9, 11 et 15, le moyen de poinçonnage est illustré en position d'attente.

Par le terme « poinçonnage », il est entendu dans le cadre de la présente description que le moyen de poinçonnage 7 comporte une extrémité acérée, par exemple une dent pointue 7a, de préférence formée par exemple par découpage et pliage dans une lame électriquement conductrice comme décrit ci-dessous. Cette extrémité acérée est configurée pour que lorsqu'il passe de la position d'attente à la position de connexion, l'extrémité acérée suit un mouvement, par exemple rectiligne, ou de rotation, afin de pénétrer le matériau du câble 3 jusqu'au cœur du câble 3 selon une direction perpendiculaire au plan tangent à l'enveloppe extérieure du câble 3, ou selon un angle proche de 90°, par exemple supérieur à 70°. L'extrémité acérée du moyen de poinçonnage 7 pénètre de préférence la gaine isolante du tronçon de câble 3, pour entrer en contact avec le cœur conducteur du tronçon de câble 3.

La dent pointue 7a comporte de préférence une forme s'opposant à son extraction de la matière du tronçon de câble 3, comme illustré à titre d'exemple sur les figures 6, 8, 10 et 12. Cette forme comporte notamment des pointes latérales s'étendant dans une direction transversale à la pointe principale de la dent pointue.

Dans certains modes de réalisation, dont celui par exemple illustré en figure 1 à 7 et 10 à 16, le moyen de poinçonnage 7 comporte au moins deux dents pointues 7a. Les dents 7a sont disposées de sorte que lorsqu'un tronçon de câble 3 est maintenu par le moyen de maintien 6, et que l'on passe le moyen de poinçonnage 7 en position de connexion, les dents 7a pénètrent le tronçon câble 3 en deux emplacements distincts de sa circonférence, comme illustré aux figure 4, 5, 7, 11 et 15. Ces emplacements sont distants l'un de l'autre, par exemple d'une distance au moins égale au quart de la circonférence de la section du tronçon de câble 3.

Le dispositif 1 peut comporter ou être constitué intégralement d'une lame de matière électriquement conductrice, ladite lame étant découpée et/ou pliée pour former tout ou partie du dispositif 1. Cette matière est de préférence métallique et élastique, par exemple une bande en acier ressort inoxydable. Cette bande de matière peut avoir une épaisseur relativement faible et par exemple comprise entre 0,5mm et 1mm, sans que ces valeurs ne soient limitatives. Bien entendu, toute autre matière techniquement équivalente, ayant de bonnes propriétés de conductivité électrique et d'élasticité peut convenir. Cette matière peut en outre comporter ou non un traitement de surface thermique et/ou chimique pour ajouter des propriétés par exemple de protection en fonction de la nature de la pièce 2 en présence du milieu ambiant.

Les moyens de connexion électrique 5 peuvent chacun comporter au moins une dent pointue 8, formée par exemple par découpage et pliage dans une lame électriquement conductrice comme décrit ci-dessus. Un ou deux des moyens de connexion électrique 5 peut comporter une pluralité de dents 8 alignées dans le même plan. Un ou deux des moyens de connexion électrique 5 peut comporter un ou plusieurs groupes de dents 8 alignées dans le même plan. Par exemple, chaque moyen de connexion électrique 5 peut comporter un groupe de neuf dents 8. Dans un autre mode de réalisation non illustré, un moyen de connexion électrique 5 peut comporter deux groupes de deux dents 8, les groupes de dents 8 étant séparés par des espaces libres, et l'autre moyen de connexion électrique 5 peut comporter un groupe de cinq dents 8. Comme illustré en figure 1, un moyen de connexion électrique 5 peut comporter deux groupes de trois dents 8, et l'autre moyen de connexion électrique 5 peut comporter deux dents 8, séparées d'un espace libre. Ces exemples ne limitent bien sûr en rien la portée de l'invention, le nombre de dents 8 et les espacements éventuels entre dents 8 ou groupes de dents 8, pour chacun des moyens de connexion 5, dépendant de chaque application.

Pour chaque jambes 4a du U, la ou les dents 8 peuvent s'étendre sur une distance relativement faible par rapport au reste de la jambe 4a, de sorte que lorsqu'une pièce 2 est insérée dans la section en U 4, non seulement la dent 8, mais également une partie de la face de la jambe 4a à partir de laquelle s'étend la dent 8, est en contact avec la pièce 2. C'est par exemple le cas du mode de réalisation illustré aux figures 1 à 5, en ce qui concerne la jambe 4a située en position inférieure sur les figures.

Pour chaque jambes 4a du U, la ou les dents 8 peuvent s'étendre sur une distance relativement importante par rapport au reste de la jambe 4a, de sorte que lorsqu'une pièce 2 est insérée dans la section en U 4, la dent 8 soit la seule partie de la jambe 4a en contact avec la pièce 2. C'est par exemple le cas du mode de réalisation illustré aux figures 1 à 5, en ce qui concerne la jambe 4a située en position supérieure sur les figures.

Les dents 8 sont configurées pour pénétrer la matière conductrice de la pièce 2, éventuellement après avoir traversé une couche d'anodisation, afin de produire des connexions électriques fiables. Cette pénétration, et donc ces connexions fiables, a lieu de préférence automatiquement au moment de l'insertion de la pièce 2 dans la section en U 4.

Les pointes des dents 8 sont de préférence orientées de sorte que lorsque la pièce 2 est partiellement insérée dans la section en U 4, les pointes des dents 8 s'opposent à un retrait de la pièce 2 de la section en U 4. Plus précisément, les pointes des dents 8 s'étendent en direction du fond 4b du U, ou en direction d'un plan perpendiculaire aux jambes 4a et prolongeant le fond 4b du U, et non en direction de l'ouverture du U du côté des extrémités libres des jambes 4a du U. Ainsi les dents 8, en plus de leur fonction de connexion électrique, ont également une fonction de fixation mécanique.

Le moyen de maintien 6 est de préférence configuré pour maintenir le tronçon de câble 3 hors de la section en U 4, c'est-à-dire hors de l'espace situé entre les jambes 4a du U. Le tronçon de câble 3 est alors par exemple maintenu en position par le moyen de maintien 6 contre la paroi extérieure d'une des jambes 4a du U.

Le moyen de maintien 6 comporte au moins un mode actif, et un mode inactif. Dans la position active du moyen de maintien 6, il est apte à maintenir le tronçon de câble 3. Dans la position inactive du moyen de maintien 6, il n'est pas apte à maintenir le tronçon de câble 3, mais dans cette position, le tronçon de câble 3 peut être passé d'une position dans laquelle il n'est pas maintenu par le moyen de maintien 6, vers une position dans laquelle il est maintenu par le moyen de maintien 6, et inversement.

Le passage du mode actif vers le mode inactif du moyen de maintien 6, et inversement, peut être obtenue par une déformation élastique, ou plastique, de la partie mobile ou de sa fixation au reste du dispositif 1.

Lorsque le moyen de maintien 6 est configuré pour maintenir le tronçon de câble 3 hors de l'espace situé entre les jambes 4a du U, le moyen de maintien 6 peut comporter deux éléments de maintien 6a, 6b. Un au moins des éléments de maintien constitue la partie mobile décrite ci-dessus. Le moyen de maintien 6 peut alors être mis dans une position active, dans laquelle la distance entre les deux éléments de maintien 6a, 6b est inférieure à la section du câble, les deux éléments de maintien 6a, 6b formant alors une barrière à la séparation du tronçon de câble 3 d'avec le dispositif 1. Le moyen de maintien 6 peut également être mis dans une position inactive, dans laquelle la distance entre les deux éléments de maintien 6a, 6b est supérieure ou égale à la section du câble, le tronçon de câble 3 n'étant plus maintenu en position par rapport au dispositif 1, l'espace entre les deux éléments de maintien 6a, 6b permettant d'insérer le tronçon de câble 3, ou de le retirer, d'entre les éléments de maintien 6a, 6b.

Ces dispositions permettent d'effectuer l'assemblage du tronçon de câble 3 avec le dispositif 1 selon un procédé comportant les étapes suivantes :
- passage du moyen de maintien 6 en position inactive, en écartant les parties 6a, 6b l'une de l'autre,
- insertion du tronçon de câble 3 entre les parties 6a, 6b,
- passage du moyen de maintien 6 en position active, en rapprochant les parties 6a, 6b l'une de l'autre, le tronçon de câble 3 ne pouvant alors plus être séparé du dispositif 1.

Les deux parties 6a, 6b peuvent être des éléments dédiés uniquement au moyen de maintien 6, ou une des parties peut être formée par une jambe 4a de la section en U 4, comme illustré en figure 9.

Le passage d'une position active à inactive, et inversement, du moyen de maintien 6, c'est-à-dire l'écartement et le rapprochement des parties 6a, 6b, peut être réalisé par une déformation du moyen de maintien 6, par exemple d'une ou des deux parties 6a, 6b, ou de la liaison des parties 6a, 6b avec le reste du dispositif 1.

Cette déformation peut être élastique, comme dans les modes de réalisation illustrés aux figures 6 à 9. On entend ici par déformation élastique une déformation réversible, dans laquelle le moyen de maintien 6 est déformé sous l'effet d'une pression, et revient à sa forme initiale lorsqu'il ne subit plus cette pression. Dans ce cas, le moyen de maintien 6 au repos, c'est-à-dire ne subissant pas de pression, est en position active. C'est lorsque l'on souhaite insérer ou retirer un tronçon de câble 3 du moyen de maintien 6 qu'on applique alors la pression nécessaire pour passer le moyen de maintien 6 en position inactive.

La déformation élastique peut être réalisée manuellement. Dans ce cas, au moins une des parties 6a, 6b peut comporter, à l'emplacement sur lequel la pression doit être appliquée pour passer d'une position à l'autre, une sous-partie courbée 9. La sous-partie courbée 9 permet à un opérateur d'appliquer la pression nécessaire à la déformation du moyen de maintien 6, par exemple d'écarter les parties 6a, 6b pour insérer le tronçon de câble 3 entre elles, sans risque de se blesser.

Cette déformation peut également être plastique, comme dans les modes de réalisation illustrés aux figures 1 à 5 et 10 à 16. On entend ici par déformation plastique une déformation dans laquelle le moyen de maintien 6 est déformé sous l'effet d'une pression, et ne revient pas à sa forme initiale lorsqu'il ne subit plus cette pression. Une pression plus importante étant nécessaire pour générer la déformation plastique, celle-ci est de préférence appliquée par l'intermédiaire d'un outil, par exemple une pince 11. Comme illustré à la figure 5, on peut alors imaginer que le moyen de maintien 6 soit fabriqué en position inactive, et lors de l'installation du dispositif 1 sur site, un opérateur le passe en position active après avoir inséré un tronçon de câble 3 entre les parties 6a, 6b.

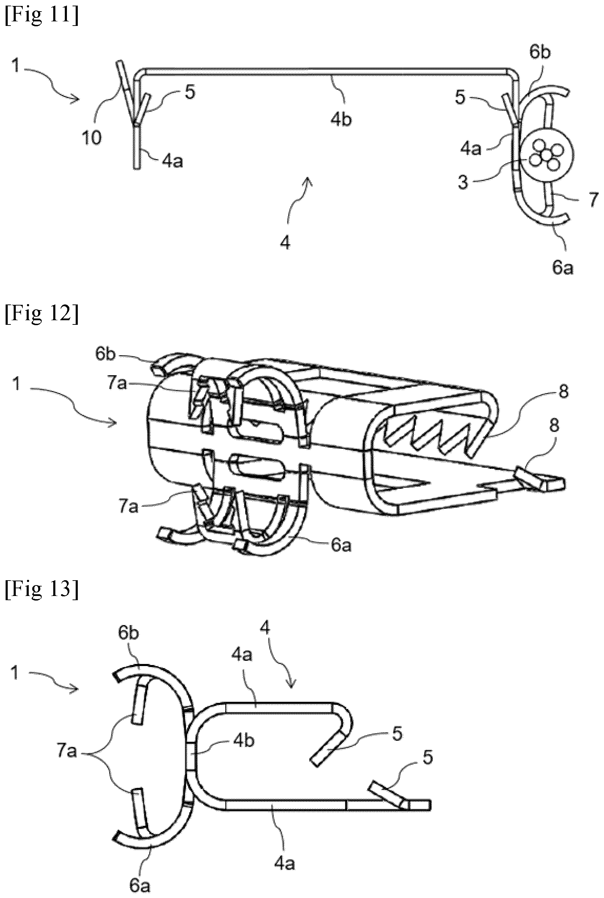

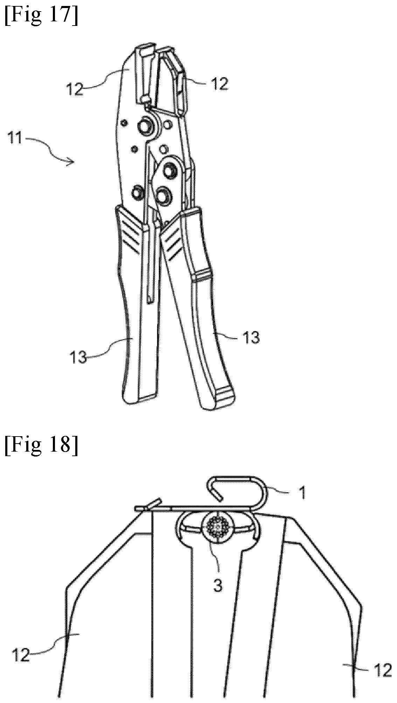

Les figures 17 à 21 illustrent un exemple d'une pince 11, adaptée par exemple à un dispositif tel qu'illustré aux figures 1 à 5 ou aux figures 12 à 16. La pince 11 comporte deux mors 12, mobiles en rotation l'un par rapport à l'autre, afin de passer la pince 11 d'une position ouverte à une position fermée, et inversement. La pince 11 est de préférence actionnée par deux poignées 13 par un opérateur, à une main, comme une pince classique.

Les mors 12 sont spécialement adaptés à l'invention. Ils comportent une forme correspondant à la forme du dispositif 1, de sorte que :
- en position ouverte, les mors 12 épousent la forme du moyen de maintien 6 lorsqu'il est en mode inactif et du moyen de poinçonnage 7 lorsqu'il est en position d'attente, et
- en position intermédiaire, correspondant à une position entre la position ouverte et la position fermée, les mors 12 épousent la forme du moyen de maintien 6 lorsqu'il est en mode actif et du moyen de poinçonnage 7 lorsqu'il est en position de connexion.

La pince 11 peut ainsi être utilisée de la manière suivante :
- mise en position ouverte de la pince 11,
- placement d'un dispositif 1 entre les mors 12,
- mise en position intermédiaire de la pince 11, de sorte que le dispositif 1 soit situé entre les mors 12, la pression exercée par la pince 11 sur le dispositif 1 étant suffisante pour que le dispositif 1 soit solidaire de la pince 11, le moyen de maintien 6 du dispositif 1 étant en mode inactif, et le moyen de poinçonnage 7 du dispositif 1 étant en position d'attente. A la fin de cette étape, un opérateur peut tenir la pince et le dispositif à une main,
- placement du tronçon de câble 3 au niveau du moyen de maintien 6 et du moyen de poinçonnage 7. Cette étape peut être réalisée avec la deuxième main de l'opérateur,
- mise en position fermée de la pince 11, de sorte à mettre le moyen de maintien 6 en mode actif, et le moyen de poinçonnage 7 en position de connexion, le maintien du tronçon de câble 3 par le moyen de maintien 6 et la connexion électrique du tronçon de câble 3 au dispositif 1 étant assurée,
- le cas échéant, fixation mécanique et connexion électrique du dispositif 1 à la pièce 2, en tenant le dispositif 1 par l'intermédiaire de la pince 11.

La pince 11 permet donc à un opérateur seul de réaliser ces opérations simplement.

Comme dans l'exemple illustré aux figures 17 à 21, les mors 12 de la pince comportent par exemple une face intérieure incurvée, présentant une section en arc de cercle selon un plan perpendiculaire à l'axe de rotation des mors 12.

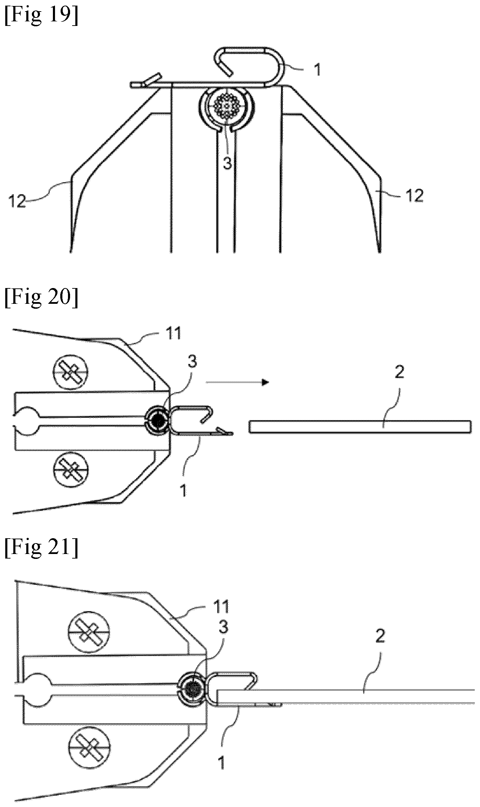

De façon avantageuse, et comme illustré à titre d'exemple aux figures 12 à 16, le moyen de maintien 6 du dispositif 1 peut s'étendre à partir du fond 4b de la section en forme de U. De cette manière, comme illustré aux figures 20 et 21, le procédé décrit ci-dessus peut facilement être mis en œuvre, avec un assemblage du câble avec le dispositif 1, puis une fixation du dispositif 1 à la pièce 2.

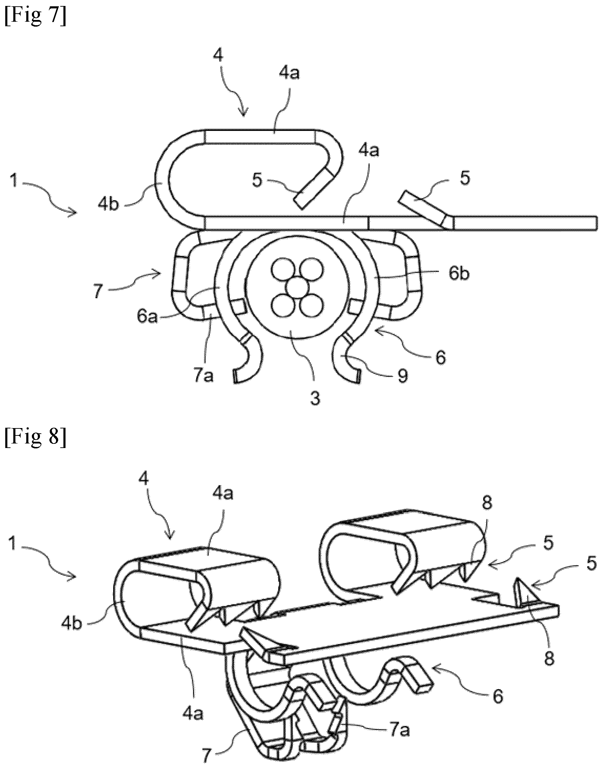

Le moyen de poinçonnage 7 peut également être configuré pour subir une déformation plastique lorsqu'il passe de la position d'attente à la position de connexion. C'est le cas notamment des modes de réalisation illustrés sur les figures 1 à 5, 6 à 7 et 10 à 11, dans lesquels une pince peut être utilisée pour rapprocher les dents 7a du moyen de poinçonnage 7 et le passer en position de connexion. C'est également le cas du mode de réalisation illustré aux figures 8 et 9, dans lequel les dents 7a du moyen de poinçonnage 7 doivent être déplacées vers le haut. La déformation plastique offre l'avantage de ne pas risquer un passage accidentel de la position de connexion à la position d'attente, et donc une perte de la connexion électrique entre le dispositif 1 et le tronçon de câble 3.

Comme illustré à titre d'exemple aux figures 10 et 11, le dispositif 1 peut comporter au moins un moyen de connexion électrique supplémentaire 10, configuré pour relier électriquement le dispositif 1 à une pièce supplémentaire (non représentée), distincte de la pièce 2 Dans ce mode de réalisation, la pièce 2 peut être une pièce de support d'un équipement électrique, dont fait partie la pièce supplémentaire, le fond 4b du U de la section en U 4 étant alors configuré pour être intercalé entre la pièce 2 et la pièce supplémentaire. Le moyen de connexion électrique supplémentaire 10 peut comporter une ou plusieurs dents pointues, comme décrit plus haut pour les moyens de connexion électrique 5.

Le dispositif 1 peut être utilisé pour connecter électriquement une pièce 2 réalisée au moins partiellement dans un matériau électriquement conducteur et un tronçon de câble 3 comportant un cœur électriquement conducteur, selon un procédé comportant les étapes suivantes :
- assemblage du tronçon de câble 3 avec un dispositif de connexion 1, par l'intermédiaire du moyen de maintien 6 du dispositif de connexion, le moyen de poinçonnage 7 dudit dispositif de connexion 1 étant en position d'attente,
- insertion partielle de la pièce 2 dans la section en U 4 du dispositif de connexion 1, générant la fixation mécanique et la liaison électrique entre la pièce 2 et le dispositif de connexion 1,
- mise en position de connexion du moyen de poinçonnage 7, générant la fixation mécanique et la liaison électrique entre le tronçon de câble 3 et la pièce 2, par l'intermédiaire de la fixation mécanique et de la liaison électrique entre le tronçon de câble 3 et le dispositif de connexion 1.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Dispositif de connexion électrique (1) entre au moins une pièce (2) réalisée au moins partiellement dans un matériau électriquement conducteur et un tronçon de câble (3) comportant au moins un cœur électriquement conducteur, ***caractérisé en ce que*** il comporte :
- une section (4) en forme de U, comportant deux jambes (4a) reliée à un fond (4b), configurée pour recevoir partiellement ladite au moins une pièce (2) entre les deux jambes du U, ladite section (4) en forme de U présentant une certaine flexibilité et étant dimensionnée afin de pouvoir exercer une pression sur ladite au moins une pièce (2), de former une pince et d'assurer une fixation mécanique entre ledit dispositif de connexion électrique (1) et ladite au moins une pièce (2), ladite section (4) en forme de U comportant deux moyens de connexion électrique (5), disposés chacun sur une des jambes (4a) du U, permettant de générer une connexion électrique entre ladite au moins une pièce (2) et ledit dispositif de connexion électrique (1) lorsque ladite au moins une pièce (2) est partiellement disposée entre les jambes (4a) du U,
- un moyen de maintien (6), apte à maintenir ledit tronçon de câble (3) en position par rapport au dispositif de connexion électrique (1), le moyen de maintien (6) comportant au moins un mode actif, dans lequel il est apte à maintenir le tronçon de câble (3), et un mode inactif, dans lequel le tronçon de câble peut être passé d'une position dans laquelle il n'est pas maintenu par le moyen de maintien (6), vers une position dans laquelle il est maintenu par le moyen de maintien (6), et inversement, et
- un moyen de poinçonnage (7) configuré pour pouvoir être mis en position d'attente, dans lequel il n'est pas en contact électrique avec le cœur du tronçon de câble (3) lorsque ledit tronçon de câble (3) est maintenu en position par ledit moyen de maintien (6), ou dans une position de connexion, dans lequel il pénètre au moins partiellement le cœur du tronçon de câble (3), afin de générer une connexion électrique entre le cœur du tronçon de câble (3) et ladite au moins une pièce (2) partiellement insérée entre les jambes (4a) du U, et une fixation mécanique entre le tronçon de câble (3) et le dispositif de connexion électrique (1).

2. Dispositif de connexion électrique (1) selon la revendication 1, **caractérisé en ce qu'**il comporte une lame électriquement conductrice, ledit dispositif de connexion électrique (1) consistant en ladite lame découpée et/ou pliée.

3. Dispositif de connexion électrique (1) selon l'une des revendications 1 à 2, **caractérisé en ce qu'**il est configuré pour que lorsque ledit tronçon de câble (3) est maintenu en position par rapport au dispositif de connexion électrique (1) par le moyen de maintien (6), ledit tronçon de câble (3) appartient à un câble pouvant s'étendre de part et d'autre dudit tronçon de câble (3).

4. Dispositif de connexion électrique (1) selon l'une des revendications 1 à 3, **caractérisé en ce qu'**il est configuré pour que lorsque ledit tronçon de câble (3) est maintenu en position par rapport au dispositif de connexion électrique (1) par le moyen de maintien (6), ledit tronçon de câble (3) est disposé parallèlement aux jambes du U.

5. Dispositif de connexion électrique (1) selon l'une des revendications 1 à 4, **caractérisé en ce que** au moins un desdits deux moyens de connexion électrique (5) comprend au moins une dent pointue (8), la pointe de ladite au moins une dent pointue (8) étant configurée pour entrer dans la matière de ladite au moins une pièce (2), lorsque ladite au moins une pièce (2) est partiellement insérée entre les jambes (4a) du U.

6. Dispositif de connexion électrique (1) selon la revendication 5, dans lequel la pointe de ladite au moins une dent pointue (8) est orientée de façon à s'opposer à un retrait de ladite au moins une pièce (2) d'entre les jambes (4a) du U.

7. Dispositif de connexion électrique (1) selon l'une des revendications 1 à 6, dans lequel le moyen de poinçonnage (7) comporte au moins une dent pointue (7a), la dent pointue (7a) étant configurée pour que lorsque le moyen de poinçonnage (7) est en position d'attente, la pointe présente avec le plan tangent à la surface du tronçon de câble (3) un angle compris entre 70 et 90 °.

8. Dispositif de connexion électrique (1) selon la revendication 7, dans lequel le moyen de poinçonnage (7) comporte au moins deux dents pointue (7a), lesdites dents pointues (7a) étant configurées pour pénétrer le tronçon de câble (3) en deux emplacements distincts de sa circonférence, ces deux emplacements étant séparés d'une distance au moins égale au quart de la circonférence de la section dudit tronçon de câble (3).

9. Dispositif de connexion électrique (1) selon l'une des revendications 1 à 8, dans lequel le moyen de maintien (6) comporte deux éléments de maintien (6a, 6b), et dans le mode actif du moyen de maintien (6), la distance entre les deux éléments de maintien (6a, 6b) est inférieure à la section du tronçon de câble (3), et dans le mode inactif du moyen de maintien (6), la distance entre les deux éléments de maintien (6a, 6b) est supérieure ou égale à la section du tronçon de câble (3), afin de pouvoir insérer le tronçon de câble (3) entre lesdits éléments de maintien (6a, 6b).

10. Dispositif de connexion électrique (1) selon l'une des revendications 1 à 9, dans lequel les deux jambes (4a) du U présentent deux longueurs différentes.

11. Dispositif de connexion électrique (1) selon l'une des revendications 1 à 10, dans lequel le moyen de maintien (6) est configuré pour subir une déformation élastique pour passer de son mode actif à son mode inactif, et inversement.

12. Dispositif de connexion électrique (1) selon l'une des revendications 1 à 10, dans lequel le moyen de maintien (6) est configuré pour subir une déformation plastique pour passer de son mode actif à son mode inactif, et inversement.

13. Dispositif de connexion électrique (1) selon l'une des revendications 1 à 12, dans lequel le moyen de poinçonnage (7) est configuré pour subir une déformation plastique pour passer de la position d'attente à la position de connexion.

14. Ensemble comportant un dispositif de connexion électrique (1) selon l'une des revendication 1 à 13, un tronçon de câble (3) comportant un cœur électriquement conducteur, et au moins une pièce (2) réalisée au moins partiellement dans un matériau électriquement conducteur, ledit tronçon de câble (3) étant maintenu en position par le moyen de maintien (6) dudit dispositif de connexion électrique (1), le moyen de poinçonnage (7) dudit dispositif de connexion électrique (1) étant en position de connexion, et ladite au moins une pièce (2) étant partiellement insérée dans la section (4) en forme de U, ladite au moins une pièce (2) et le tronçon de câble (3) étant reliés mécaniquement et électriquement entre eux par l'intermédiaire du dispositif de connexion électrique (1).

15. Ensemble comportant un dispositif de connexion électrique (1) selon l'une des revendication 12 à 13 et une pince (11), ladite pince (11) comportant deux mors (12) mobiles l'un par rapport à l'autre selon un axe de rotation, afin de passer d'une position ouverte vers une position fermée, et inversement, la forme des mors (12) étant configurée pour que :
- dans une position intermédiaire de la pince (11), entre la position ouverte et la position fermée, les mors (12) épousent la forme du moyen de maintien (6) en mode inactif et du moyen de poinçonnage (7) en position d'attente, et
- en position fermée de la pince (11), les mors (12) épousent la forme du moyen de maintien (6) en mode actif et du moyen de poinçonnage (7) en position de connexion.

16. Procédé de connexion électrique entre au moins une pièce (2) réalisée au moins partiellement dans un matériau électriquement conducteur et un tronçon de câble (3) comportant un cœur électriquement conducteur, comportant les étapes suivantes :
- assemblage du tronçon de câble (3) et d'un dispositif de connexion électrique (1) selon l'une des revendications 1 à 13, par l'intermédiaire du moyen de maintien (6) du dispositif de connexion électrique (1), le moyen de poinçonnage (7) dudit dispositif de connexion électrique (1) étant en position d'attente,
- insertion partielle de ladite au moins une pièce (2) dans la section (4) en forme de U du dispositif de connexion électrique (1), générant la fixation mécanique et la liaison électrique entre ladite au moins une pièce (2) et le dispositif de connexion électrique (1),
- mise en position de connexion du moyen de poinçonnage (7), générant la fixation mécanique et la liaison électrique entre le tronçon de câble (3) et ladite au moins une pièce (2), par l'intermédiaire de la fixation mécanique et de la liaison électrique entre le tronçon de câble (3) et le dispositif de connexion électrique (1).

17. Procédé d'utilisation d'un ensemble selon la revendication 15, comportant les étapes suivantes :
- mise en position ouverte de la pince (11),
- placement d'un dispositif (1) entre les mors (12),
- mise en position intermédiaire de la pince (11), de sorte que le dispositif (1) soit situé entre les mors (12), la pression exercée par la pince (11) sur le dispositif (1) étant suffisante pour que le dispositif (1) soit solidaire de la pince (11), le moyen de maintien (6) du dispositif 1 étant en mode inactif, et le moyen de poinçonnage (7) du dispositif (1) étant en position d'attente,
- placement d'un tronçon de câble (3) au niveau du moyen de maintien (6) et du moyen de poinçonnage (7),
- mise en position fermée de la pince (11), de sorte à mettre le moyen de maintien (6) en mode actif, et le moyen de poinçonnage (7) en position de connexion, afin d'assurer le maintien du tronçon de câble (3) par le moyen de maintien (6) et la connexion électrique du tronçon de câble (3) au dispositif (1).
